(19) Europäisches Patentamt / European Patent Office / Office européen des brevets

(11) **EP 2 415 047 B1**

(12) **FASCICULE DE BREVET EUROPEEN**

(45) Date de publication et mention
de la délivrance du brevet:
**13.03.2013 Bulletin 2013/11**

(21) Numéro de dépôt: **10716565.6**

(22) Date de dépôt: **22.03.2010**

(51) Int Cl.:
*G10L 25/00* *(2013.01)*    *G10L 21/00* *(2013.01)*

(86) Numéro de dépôt international:
**PCT/FR2010/050510**

(87) Numéro de publication internationale:
**WO 2010/112728 (07.10.2010 Gazette 2010/40)**

(54) **Classification du bruit de fond contenu dans un signal sonore**

Klassifizieren von in einem Tonsignal enthaltenem Hintergrundrauschen

Classifying background noise contained in an audio signal

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **31.03.2009 FR 0952053**

(43) Date de publication de la demande:
**08.02.2012 Bulletin 2012/06**

(73) Titulaire: **France Télécom
75015 Paris (FR)**

(72) Inventeurs:
• **LEMAN, Adrien**
  **F-59260 Lille (FR)**
• **FAURE, Julien**
  **F-22300 Ploubezre (FR)**

(56) Documents cités:
**US-A- 5 727 072     US-B1- 6 782 361**

• **MA L ET AL: "Context Awareness using
Environmental Noise Classification"
EUROSPEECH 2003, 1 septembre 2003
(2003-09-01), pages 2237-2240, XP007006661 cité
dans la demande**
• **SUNDARAM H ET AL: "Audio scene
segmentation using multiple features, models
and time scales" ACOUSTICS, SPEECH, AND
SIGNAL PROCESSING, 2000. ICASSP '00.
PROCEEDING S. 2000 IEEE INTERNATIONAL
CONFERENCE ON 5-9 JUNE 2000, PISCATAWAY,
NJ, USA,IEEE, vol. 6, 5 juin 2000 (2000-06-05),
pages 2441-2444, XP010504798**
• **PELTONEN V ET AL: "Computational auditory
scene recognition" 2002 IEEE INTERNATIONAL
CONFERENCE ON ACOUSTICS, SPEECH, AND
SIGNAL PROCESSING. PROCEEDINGS.
(ICASSP). ORLANDO, FL, MAY 13 - 17, 2002; [IEEE
INTERNATIONAL CONFERENCE ON
ACOUSTICS, SPEECH, AND SIGNAL
PROCESSING (ICASSP)], NEW YORK, NY : IEEE,
US, vol. 2, 13 mai 2002 (2002-05-13), pages II-1941,
XP010804229**

**Description**

La présente invention a trait de manière générale au traitement des signaux audio et notamment les signaux audio transmis dans les systèmes de télécommunications. L'invention concerne en particulier un procédé et un dispositif de classification du bruit de fond contenu dans un signal audio.

L'invention s'applique notamment aux signaux de parole transmis au cours d'une communication téléphonique au travers d'un réseau de communication, par exemple un réseau de téléphonie mobile ou un réseau de téléphonie sur réseau commuté ou sur réseau de paquets.

En acoustique et plus particulièrement dans le domaine de la parole, le bruit présent dans un signal audio peut être défini, par exemple, par tout ce qui peut gêner lors de la compréhension du signal audio par un être humain, ou bien par ce qui peut gêner le résultat d'une tâche de reconnaissance ou de discrimination entre différents types de signaux (parole/musique par exemple). La présence de bruit dans un signal audio peut être perturbante car le bruit peut masquer les caractéristiques spécifiques du signal utile (parole ou musique par exemple). Dans certains cas, le bruit de fond peut être un élément de la communication pouvant apporter des informations utiles aux auditeurs (contexte de mobilité, lieu géographique, partage d'ambiance).

Dans le domaine de la communication vocale, le bruit inclus dans un signal de parole, désigné par "bruit de fond", peut inclure des bruits divers : des sons provenant de moteurs (automobiles, motos), d'avions passant dans le ciel, des bruits de conversation/murmures - par exemple dans un environnement de restaurant ou de café -, de la musique, et bien d'autres bruits audibles.

Depuis l'avènement de la téléphonie mobile, la possibilité de communiquer depuis n'importe quel endroit a contribué à augmenter la présence de bruit de fond dans les signaux de parole transmis, et a rendu par conséquent nécessaire le traitement du bruit de fond, afin de préserver un niveau acceptable de qualité de communication.

Par ailleurs, outre les bruits provenant de l'environnement où a lieu la prise de son, des bruits parasites, produits notamment lors du codage et de la transmission du signal audio sur le réseau (pertes de paquets par exemple, en voix sur IP) peuvent également interagir avec le bruit de fond. Dans ce contexte, on peut donc supposer que la qualité perçue de la parole transmise est dépendante de l'interaction entre les différents types de bruit composant le bruit de fond.

Ainsi, le **document [1]** : "Influence of informational content of background noise on speech quality evaluation for VoIP application", de A. Leman, J. Faure et E. Parizet - article présenté lors de la conférence "Acoustics'08" qui s'est tenue à Paris du 29 juin au 4 juillet 2008 - décrit des tests subjectifs qui, non seulement montrent que le niveau sonore des bruits de fond joue un rôle prépondérant dans l'évaluation de la qualité vocale dans le cadre d'une application voix sur IP (VoIP), mais démontrent également que le type de bruit de fond (bruit d'environnement, bruit de ligne, etc.) qui se superpose au signal vocal (le signal utile) joue un rôle important lors de l'évaluation de la qualité vocale de la communication.

La classification de bruit dans des signaux audio a déjà fait l'objet de travaux connus. Par exemple, le **document [2]** : "Context awareness using environmental noise classification", de L. Ma, D.J. Smith et B.P. Milner - article présenté lors de la conférence "Eurospeech", 2003 - décrit une méthode de classification de bruit reposant sur un modèle de Markov caché (HMM). Selon la méthode décrite, dix bruits d'environnement (bar, plage, rue, bureau, ...) peuvent être classifiés en utilisant des coefficients MFCC *(Mel-Frequency Cepstral Coefficients)* et des indicateurs dérivés (une trentaine d'indicateurs au total), pour caractériser un signal audio. Les indicateurs obtenus sont ensuite appliqués à un modèle de Markov caché (HMM). Les indicateurs utilisés permettent ainsi de classifier 90% des bruits présents dans un signal. Cependant, la méthode précitée est très coûteuse en temps de traitement compte tenu du nombre élevé d'indicateurs utilisés.

Le **document [3]** : "Robust speech recognition using PCA-based noise classification" de N. Thaphithakkul et al. - article présenté lors de la conférence "SPECOM", 2005 - décrit une méthode de classification de bruit d'environnement utilisant une analyse en composantes principales (PCA), destinée à la reconnaissance vocale. Selon la méthode décrite, quatre types de bruits sont classifiés (bruit blanc, bruit rose, bruit de voiture, murmure confus (*babble* en anglais)) en utilisant des vecteurs caractéristiques constitués de spectres logarithmiques normalisés (NLS) qui sont ensuite projetés sur les composantes principales d'un espace issu de l'apprentissage par PCA. La classification est finalement effectuée par des machines à vecteurs de support (*SVM : Support Vector Machines*). Cependant, les bruits classifiés sont de type trop précis, avec des caractéristiques fréquentielles aisément identifiables et, d'autre part, cette technique est également assez coûteuse en ressources de traitement.

Le **document [4]** : "Frame-level noise classification in mobile environments" de K. El-Maleh et al. - paru dans Proc. IEEE Conf. Acoustics, Speech, Signal Proc. (Phoenix, AZ), pp. 237-240, mars 1999 - décrit une technique de classification de bruit de fond dans le contexte de la téléphonie mobile, en particulier quatre types de bruits sont classifiés : rue, murmure confus (*babble* en anglais), usine, bus. Les caractéristiques utilisées pour la classification sont les fréquences de raies spectrales (LSF : *line spectral frequencies*). Différents types de classificateurs utilisant ces caractéristiques sont alors comparés, en particulier un arbre de décision (DTC : *decision tree classifier*) et un classificateur quadratique gaussien (QGC : *quadratic gaussian classifier*). Cependant, cette dernière technique utilise encore des indicateurs (LSF) coûteux à calculer, à moins de se placer dans le domaine codé et non audio.

Ainsi, les techniques de classification de bruits susmentionnées, sont complexes et imposent des temps de calcul importants, en raison notamment du type et du nombre élevé de paramètres requis pour mettre en oeuvre la classification.

La présente invention vise notamment à proposer une technique de classification du bruit de fond présent dans un signal audio, qui soit relativement simple à mettre en oeuvre et qui soit peu coûteuse en ressources de traitement comparativement aux méthodes connues, et, en particulier, qui nécessite des ressources de traitement compatibles avec l'utilisation de cette technique dans des applications embarquées, qu'il s'agisse par exemple d'utiliser cette technique dans des applications de mesure de qualité vocale, ou d'applications de traitement du signal de parole, telles que de la réduction de bruit ou de la reconnaissance vocale.

La présente invention concerne ainsi, selon un premier aspect, un procédé de classification du bruit de fond contenu dans un signal audio. Selon l'invention, ce procédé comprend les étapes consistant à :

- extraire du signal audio un signal de bruit de fond, dit signal de bruit ;
- calculer un premier paramètre, dit indicateur temporel, relatif à l'évolution temporelle du signal de bruit, et un second paramètre, dit indicateur fréquentiel, relatif au spectre fréquentiel du signal de bruit ;
- classifier le bruit de fond contenu dans le signal audio parmi un ensemble prédéfini de classes de bruits de fond, en fonction des valeurs de l'indicateur temporel et de l'indicateur fréquentiel calculés.

En utilisant seulement deux indicateurs (indicateurs temporel et fréquentiel), le procédé de classification de bruits de fond selon l'invention est moins coûteux en temps de calcul que les techniques de classification de signaux audio selon l'état de la technique, et de ce fait peut être utilisé dans le cadre d'applications temps réel, par exemple au cours de communications téléphoniques réelles. Par exemple, l'invention peut être combinée avec une application temps réel de débruitage embarquée dans des terminaux de communication mobiles ou fixes, permettant d'adapter la technique de débruitage utilisée à la nature du bruit de fond.

Selon un mode de réalisation particulier, l'indicateur temporel est obtenu à partir d'un calcul de variation du niveau sonore du signal de bruit, et l'indicateur fréquentiel est obtenu à partir d'un calcul de variation de l'amplitude du spectre fréquentiel du signal de bruit. La combinaison de ces deux indicateurs permet d'obtenir un taux faible d'erreurs de classifications, alors que leur calcul est peu consommateur en ressources de calcul.

Selon un mode de mise en oeuvre de l'invention, le procédé comprend les étapes consistant à :

- comparer la valeur de l'indicateur temporel (IND_TMP) obtenue pour le signal de bruit à un premier seuil (TH1), et déterminer en fonction du résultat de cette comparaison que le signal de bruit est stationnaire ou non ;
- lorsque le signal de bruit est identifié comme non-stationnaire, comparer la valeur de l'indicateur fréquentiel à un second seuil (TH2), et déterminer en fonction du résultat de cette comparaison que le signal de bruit appartient à une première classe (CL1) ou à une seconde classe (CL2) de bruits de fond ;
- lorsque le signal de bruit est identifié comme stationnaire, comparer la valeur de l'indicateur fréquentiel à un troisième seuil (TH3), et déterminer en fonction du résultat de cette comparaison que le signal de bruit appartient à une troisième classe (CL3) ou à une quatrième classe (CL4) de bruits de fond.

Par ailleurs, dans ce mode de mise en oeuvre l'ensemble des classes obtenu par le procédé de l'invention, comprend au moins les classes suivantes :

- bruit intelligible ;
- bruit d'environnement ;
- bruit de souffle ;
- bruit de grésillement.

L'utilisation des 3 seuils TH1, TH2, TH3 précités, dans une structure de classification arborescente simple permet de classifier rapidement un échantillon de signal de bruit. D'autre part, en calculant la classe d'un échantillon sur des fenêtres de courtes durées, on peut obtenir une actualisation en temps réel de la classe de bruit de fond du signal de bruit analysé.

Corrélativement, selon un deuxième aspect, l'invention concerne un dispositif de classification du bruit de fond contenu dans un signal audio, ce dispositif comprenant :

- un module d'extraction à partir du signal audio d'un signal de bruit de fond, dit signal de bruit ;
- un module de calcul d'un premier paramètre, dit indicateur temporel, relatif à l'évolution temporelle du signal de bruit, et d'un second paramètre, dit indicateur fréquentiel, relatif au spectre fréquentiel du signal de bruit ;

- un module de classification du bruit de fond contenu dans le signal audio parmi un ensemble prédéfini de classes de bruits de fond, en fonction des valeurs de l'indicateur temporel et de l'indicateur fréquentiel calculés.

Selon un autre aspect, l'invention concerne un programme d'ordinateur sur un support d'informations, ce programme comportant des instructions adaptées à la mise en oeuvre d'un procédé selon l'invention tel que brièvement défini plus haut, lorsque le programme est chargé et exécuté dans un ordinateur.

Les avantages procurés par le dispositif de classification de bruit de fond et le programme d'ordinateur précités, sont identiques à ceux mentionnés plus haut en relation avec le procédé de classification de bruit de fond selon l'invention.

L'invention sera mieux comprise à l'aide de la description détaillée qui va suivre, faite en se référant aux dessins annexés dans lesquels :

- La figure 1 représente une fenêtre logicielle affichée sur un écran d'ordinateur montrant l'arbre de sélection obtenu par apprentissage pour définir un modèle de classification de bruits de fond selon l'invention ;
- Les figures 2a et 2b représentent un organigramme illustrant un procédé classification de bruits de fond utilisant le modèle de classification obtenu conformément à l'invention ;
- La figure 3 représente un schéma fonctionnel d'un dispositif de classification de bruits de fond, selon l'invention.

L'invention propose un procédé et un dispositif de classification du bruit de fond contenu dans un signal audio. Ce procédé et ce dispositif reposent sur la mise en oeuvre d'un modèle de classification de bruit de fond, construit au préalable, et dont le mode de construction selon l'invention est décrit ci-après.

1) <u>Construction du modèle de classification des bruits de fond</u>

La construction d'un modèle de classification de bruit se déroule classiquement selon trois phases successives. La première phase consiste à déterminer une base sonore composée de signaux audio contenant divers bruits de fond, chaque signal audio étant étiqueté comme appartenant à une classe donnée de bruit. Ensuite, au cours d'une seconde phase on extrait de chaque échantillon sonore de la base un certains nombre de paramètres caractéristiques prédéfinis (désignés ici par "indicateurs") formant un ensemble d'indicateurs. Finalement, au cours de la troisième phase, dite phase d'apprentissage, l'ensemble des couples composés, chacun, de l'ensemble d'indicateurs et de la classe de bruit associée, est fourni à un moteur d'apprentissage destiné à fournir un modèle de classification permettant de classifier un échantillon sonore quelconque sur la base d'indicateurs déterminés, ces derniers étant sélectionnés comme étant les plus pertinents parmi les divers indicateurs utilisés au cours de la phase d'apprentissage. Le modèle de classification obtenu permet ensuite, sur la base d'indicateurs d'entrée extraits d'un échantillon sonore quelconque (ne faisant pas partie de la base sonore), de fournir une classe de bruit à laquelle appartient cet échantillon.

Dans le document [1] cité plus haut, il est démontré que la qualité vocale peut être influencée par la signification du bruit dans le contexte de la téléphonie. Ainsi, si des utilisateurs identifient du bruit comme étant issu d'une source sonore de l'environnement du locuteur, une certaine indulgence est observée concernant l'évaluation de la qualité perçue. Deux tests ont permis de vérifier cela, le premier test concernant l'interaction des caractéristiques et niveaux sonores des bruits de fond avec la qualité vocale perçue, et le second test concernant l'interaction des caractéristiques des bruits de fond avec les dégradations dues à la transmission de voix sur IP. Partant des résultats de l'étude exposée dans le document précité, les inventeurs de la présente invention, ont cherché à définir des paramètres (indicateurs) d'un signal audio permettant de mesurer et de quantifier la signification du bruit de fond présent dans ce signal et ensuite de définir une méthode de classification statistique du bruit de fond en fonction des indicateurs retenus.

*Phase 1 - Constitution d'une base sonore de signaux audio*

Pour la construction du modèle de classification de la présente invention, la base sonore utilisée est constituée, d'une part, des signaux audio ayant servi aux tests subjectifs décrits dans le document [1], et d'autre part de signaux audio issus de bases sonores publiques.

Concernant les signaux audio issus des tests subjectifs précités, dans le premier test (voir document [1], section 3.2) 152 échantillons sonores sont utilisés. Ces échantillons sont obtenus à partir de huit phrases de même durée (8 secondes) sélectionnées à partir d'une liste normalisée de doubles phrases, produites par quatre locuteurs (deux hommes et deux femmes). Ces phrases sont ensuite mixées avec six types de bruits de fond (détaillés plus bas) à trois niveaux différents de sonie (*loudness* en anglais). Des phrases sans bruit de fond sont également incluses. Ensuite l'ensemble des échantillons est encodé avec un codec G.711.

Dans le second test (voir document [1], section 4.1), les mêmes phrases sont mixées avec les six types de bruits de fond avec un niveau de sonie moyen, puis quatre types de dégradations dues à la transmission de voix sur IP sont introduites (codec G.711 avec 0% et 3% de perte de paquets ; codec G.729 avec 0% et 3% de perte de paquets).

Au total, 192 échantillons sonores sont obtenus selon le deuxième test.

Les six types de bruits de fond utilisés dans le cadre des tests subjectifs précités sont les suivants :

- un bruit rose (*pink-noise*), considéré comme la référence (bruit stationnaire avec -3 dB/octave de contenu fréquentiel) ;
- un bruit de parole stationnaire (BPS) c'est-à-dire un bruit aléatoire avec un contenu fréquentiel similaire à la voix humaine standardisée (stationnaire) ;
- un bruit électrique, c'est-à-dire un son harmonique ayant une fréquence fondamentale de 50Hz simulant un bruit de circuit (stationnaire) ;
- un bruit d'environnement de ville avec présence de voitures, avertisseurs sonores, etc. (non-stationnaire) ;
- un bruit d'environnement de restaurant avec présence de murmures, bruit de verres, rires, etc. (non-stationnaire) ;
- un son de voix intelligible enregistrée depuis une source TV (non-stationnaire).

Tous les sons sont échantillonnés à 8 kHz (16 bits), et un filtre passe-bande IRS (*Intermediate Reference System*) est utilisé pour simuler un réseau téléphonique réel. Les six types de bruits cités ci-dessus sont répétés avec des dégradations liées aux codages G.711 et G.729, avec des pertes de paquet, ainsi qu'avec plusieurs niveaux de diffusion.

Concernant les signaux audio issus de bases sonores publiques, utilisés pour compléter la base sonore, il s'agit de 48 autres signaux audio, comportant différents bruits, comme par exemple des bruits de ligne, de vent, de voiture, d'aspirateur, de sèche cheveux, de murmures confus (*babble*), des bruits issus du milieu naturel (oiseau, eau qui coule, pluie, ...), de la musique.

Ces 48 bruits ont été ensuite soumis à six conditions de dégradations, comme expliqué ci-après.

Chaque bruit est échantillonné à 8 kHz, filtré avec l'outil IRS8, codé et décodé en G.711 ainsi qu'en G.729 dans le cas de la bande étroite (300 - 3400 Hz), puis chaque son est échantillonné à 16 kHz, puis filtré avec l'outil décrit dans la recommandation P.341 de l'UIT-T ("Transmission characteristics for wideband (150-7000 Hz) digital hands-free telephony terminals", 1998), et enfin codé et décodé en G.722 (large bande 50 - 7000 Hz). Ces trois conditions dégradées sont ensuite restituées à deux niveaux de restitution (rapport signal à bruit : SNR=16 et 32). Chaque bruit dure quatre secondes. Finalement, on obtient au total 288 signaux audio différents.

Ainsi, la base sonore utilisée pour mettre au point la présente invention se compose finalement de 632 signaux audio.

Chaque échantillon sonore de la base sonore est étiqueté manuellement pour identifier une classe de bruit de fond d'appartenance. Les classes retenues ont été définies suite aux tests subjectifs mentionnés dans le document [1] et plus précisément, ont été déterminées en fonction de l'indulgence vis-à-vis des bruits perçus, manifestée par les sujets testés lors du jugement de la qualité vocale en fonction du type de bruit de fond (parmi les 6 types précités).

Ainsi, quatre classes de bruit de fond (BDF) ont été retenues :

- Classe 1 : BDF "intelligible" - il s'agit de bruit de nature intelligible tels que de la musique, de la parole, etc. Cette classe de bruit de fond provoque une forte indulgence sur le jugement de la qualité vocale perçue, par rapport à un bruit de souffle de même niveau.
- Classe 2 : BDF "d'environnement" - il s'agit de bruits ayant du contenu informationnel et fournissant des informations sur l'environnement du locuteur, comme des bruits de ville, de restaurant, de nature, etc. Cette classe de bruit provoque une légère indulgence sur le jugement de la qualité vocale perçue par les utilisateurs par rapport à un bruit de souffle de même niveau.
- Classe 3 : BDF "souffle" - Ces bruits sont de nature stationnaire et ne contiennent pas de contenu informationnel, il s'agit par exemple de bruit rose, de bruit de vent stationnaire, de bruit de parole stationnaire (BPS), ...
- Classe 4 : BDF "grésillement" - il s'agit de bruits ne contenant pas de contenu informationnel, comme du bruit électrique, du bruit non stationnaire bruité, etc. Cette classe de bruit provoque une forte dégradation de la qualité vocale perçue par les utilisateurs, par rapport à un bruit de souffle de même niveau.

*Phase 2 - Extraction de paramètres des signaux audio de la base sonore*

Pour chacun des signaux audio de la base sonore, huit paramètres ou indicateurs connus en soi sont calculés. Ces indicateurs sont les suivants :

- (1) La corrélation du signal : il s'agit d'un indicateur utilisant le coefficient de corrélation de Bravais-Pearson appliqué entre le signal entier et le même signal décalé d'un échantillon numérique.
- (2) Le taux de passage par zéro (ZCR) du signal;
- (3) La variation du niveau acoustique du signal ;

- **-** (4) Le centre de gravité spectral (*Spectral Centroid*) du signal;
- **-** (5) La rugosité spectrale du signal ;
- **-** (6) Le flux spectral du signal;
- **-** (7) Le point spectral de coupure (*Spectral Rolloff Point*) du signal;
- **-** (8) Le coefficient harmonique du signal.

*Phase 3 - Obtention du modèle de classification*

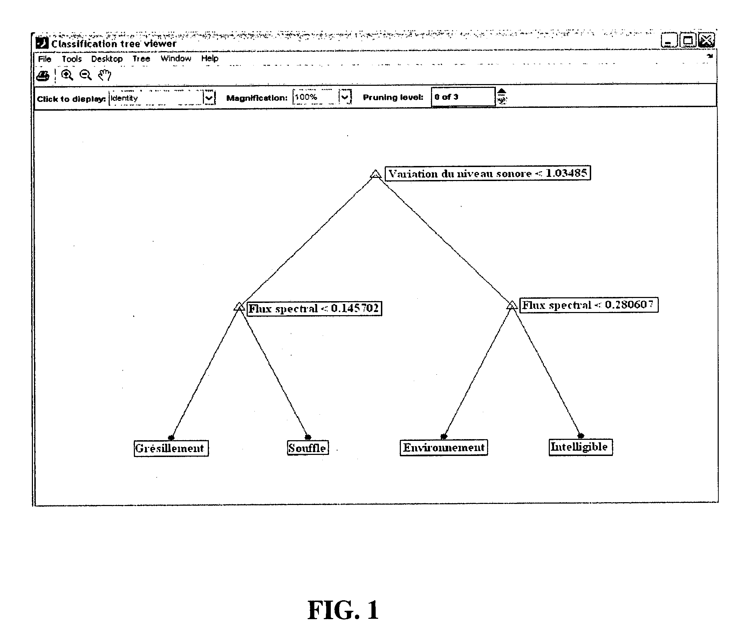

Le modèle de classification selon l'invention est obtenu par apprentissage à l'aide d'un arbre de décision (cf. figure 1), réalisé à l'aide de l'outil statistique appelé "*classregtree*" de l'environnement MATLAB® commercialisé par la société The MathWorks. L'algorithme utilisé est développé à partir de techniques décrites dans le livre intitulé "Classification and regression trees" de Leo Breiman et al. publié par Chapman and Hall en 1993.

Chaque échantillon de bruit de fond de la base sonore est renseigné par les huit indicateurs précités et la classe d'appartenance de l'échantillon (1: intelligible ; 2: environnement ; 3: souffle ; 4: grésillement). L'arbre de décision calcule alors les différentes solutions possibles afin d'obtenir une classification optimum, se rapprochant le plus des classes étiquetées manuellement. Au cours de cette phase d'apprentissage, les indicateurs audio les plus pertinents sont retenus, et des seuils de valeur associés à ces indicateurs sont définis, ces seuils permettant de séparer les différentes classes et sous-classes de bruit de fond.

Lors de l'apprentissage, 500 bruits de fond de différents types sont choisis aléatoirement parmi les 632 de la base sonore. Le résultat de la classification obtenue par apprentissage est représenté à la figure 1.

Comme on peut le voir sur l'arbre de décision représenté à la **figure 1**, la classification résultante utilise seulement deux indicateurs parmi les huit initiaux pour classer les 500 bruits de fond de l'apprentissage dans les quatre classes prédéfinies. Les indicateurs sélectionnés sont les indicateurs (3) et (6) de la liste introduite plus haut et représentent respectivement la variation du niveau acoustique et le flux spectral des signaux de bruit de fond.

Comme représenté à la figure 1, le modèle de classification obtenu par apprentissage commence par séparer les bruits de fond en fonction de leur caractère de stationnarité. Ce caractère de stationnarité est mis en évidence par l'indicateur temporel caractéristique de la variation du niveau acoustique (indicateur (3)). Ainsi, si cet indicateur a une valeur inférieure à un premier seuil - TH1 = 1,03485 - alors le bruit de fond est considéré comme stationnaire (branche gauche), sinon le bruit de fond est considéré comme non-stationnaire (branche droite). Ensuite, l'indicateur fréquentiel caractéristique du flux spectral (indicateur (6)) filtre à son tour chacune des deux catégories (stationnaire/non-stationnaire) sélectionnées avec l'indicateur (3).

Ainsi, lorsque le signal de bruit est considéré comme non-stationnaire, si l'indicateur fréquentiel est inférieur à un second seuil - TH2 = 0,280607 - alors le signal de bruit appartient à la classe "environnement", sinon le signal de bruit appartient à la classe "intelligible". D'autre part, lorsque le signal de bruit est considéré comme stationnaire, si l'indicateur fréquentiel (indicateur (6), flux spectral) est inférieur à un troisième seuil - TH3 = 0,145702 - alors le signal de bruit appartient à la classe "grésillement", sinon le signal de bruit appartient à la classe "souffle".

L'arbre de sélection obtenu selon l'invention (fig.1) avec les deux indicateurs précités a permis de classifier correctement 86,2% des signaux de bruits de fond parmi les 500 signaux audio soumis à l'apprentissage. Plus précisément, les proportions de bonne classification obtenues pour chaque classe sont les suivantes :

- • 100% pour la classe "grésillement",
- • 96,4% pour la classe "souffle",
- • 79,2% pour la classe "environnement",
- • 95,9% pour la classe "intelligible".

On peut remarquer que la classe "environnement" obtient un résultat de bonne classification plus faible que pour les autres classes. Ce résultat est dû à la différenciation entre bruits de "souffle" et "d'environnement" qui peut parfois être difficile à effectuer, de par la ressemblance de certains sons pouvant être rangés à la fois dans ces deux classes, par exemple des sons tels que le bruit du vent ou le bruit d'un sèche-cheveux.

On définit ci-après de manière plus détaillée les indicateurs retenus pour le modèle de classification selon l'invention.

L'indicateur temporel, désigné dans la suite de la description par "IND_TMP", et caractéristique de la variation du niveau sonore du signal de bruit quelconque est défini par l'écart type des valeurs des puissances de toutes les trames considérées du signal. Dans un premier temps, une valeur de puissance est déterminée pour chacune des trames. Chaque trame est composée de 512 échantillons, avec un recouvrement entre les trames successives de 256 échantillons. Pour une fréquence d'échantillonnage de 8000 Hz, cela correspond à une durée de 64 ms (millisecondes) par trame, avec un recouvrement de 32 ms. On utilise ce recouvrement de 50% pour obtenir une continuité entre trames successives, comme défini dans le **document [5]** : "P.56 Mesure objective du niveau vocal actif", recommandation de l'ITU-T, 1993.

Lorsque le bruit à classifier a une longueur supérieure à une trame, la valeur de puissance acoustique pour chacune des trames peut être définie par la formule mathématique suivante :

$$P(trame) = 10 \log(\frac{1}{L_{trame}} \sum_{i=1}^{L_{trame}} x_i^2) \qquad (1)$$

Où : "$trame$" désigne le numéro de la trame à évaluer ; "$L_{trame}$" désigne la longueur de la trame (512 échantillons) ; "$x_i$" correspond à l'amplitude de l'échantillon $i$ ; "log" désigne le logarithme décimal. On calcule ainsi le logarithme de la moyenne calculée pour obtenir une valeur de puissance par trame.

La valeur de l'indicateur temporel "IND_TMP" du bruit de fond considéré est ensuite définie par l'écart type de toutes les valeurs de puissances obtenues, par la relation suivante :

$$\text{IND\_TMP} = \sqrt{\frac{1}{Ntrame} \sum_{i=1}^{Ntrame} (P_i - <P>)^2} \qquad (2)$$

Où : $N_{trame}$ représente le nombre de trames présentes dans le bruit de fond considéré ; $P_i$ représente la valeur de puissance pour la trame $i$ ; et $<P>$ correspond à la moyenne de puissance sur toutes les trames.

Selon l'indicateur temporel IND_TMP, plus un son est non-stationnaire et plus la valeur obtenue pour cet indicateur sera élevée.

L'indicateur fréquentiel, désigné dans la suite de la description par "IND_FRQ" et caractéristique du flux spectral du signal de bruit, est calculé à partir de la Densité Spectrale de Puissance(DSP) du signal. La DSP d'un signal - issue de la transformée de Fourier de la fonction d'autocorrélation du signal - permet de caractériser l'enveloppe spectrale du signal, afin d'obtenir des informations sur le contenu fréquentiel du signal à un moment donné, comme par exemple les formants, les harmoniques, etc. Selon le mode de réalisation présenté, cet indicateur est déterminé par trame de 256 échantillons, correspondant à une durée de 32 ms pour une fréquence d'échantillonnage de 8 KHz. Il n'y a pas de recouvrement des trames, contrairement à l'indicateur temporel.

Le flux spectral (SF), également désigné par "variation de l'amplitude du spectre", est une mesure permettant d'évaluer la vitesse de variation d'un spectre de puissance d'un signal au cours du temps. Cet indicateur est calculé à partir de la corrélation croisée normalisée entre deux amplitudes successives du spectre $a_k(t-1)$ et $a_k(t)$. Le flux spectral (SF) peut être défini par la formule mathématique suivante :

$$SF(trame) = 1 - \frac{\sum_k a_k(t-1).a_k(t)}{\sqrt{\sum_k a_k(t-1)^2}\sqrt{\sum_k a_k(t)^2}} \qquad (3)$$

Où : "$k$" est un indice représentant les différentes composantes fréquentielles, et "$t$" un indice représentant les trames successives sans recouvrement, composées de 256 échantillons chacune.

En d'autres termes, une valeur du flux spectral (SF) correspond à la différence d'amplitude du vecteur spectral entre deux trames successives. Cette valeur est proche de zéro si les spectres successifs sont similaires, et est proche de 1 pour des spectres successifs très différents. La valeur du flux spectral est élevée pour un signal de musique, car un signal musical varie fortement d'une trame à l'autre. Pour la parole, avec l'alternance de périodes de stabilité (voyelle) et de transitions (consonne-voyelle), la mesure du flux spectral prend des valeurs très différentes et varie fortement au cours d'une phrase.

Lorsque le bruit à classifier a une longueur supérieure à une trame, l'expression finale retenue pour le flux spectral est définie comme la moyenne des valeurs de toutes les trames du signal comme définie dans l'équation ci-après :

$$SF_{tot} = \frac{1}{Ntrame} \sum_{i=1}^{Ntrame} SF(i) \qquad (4)$$

2) Utilisation du modèle de classification de bruits de fond

Le modèle de classification de l'invention, obtenu comme exposé supra, est utilisé selon l'invention pour déterminer sur la base d'indicateurs extraits d'un signal audio bruité quelconque, la classe de bruit à laquelle appartient ce signal bruité parmi l'ensemble de classes définies pour le modèle de classification.

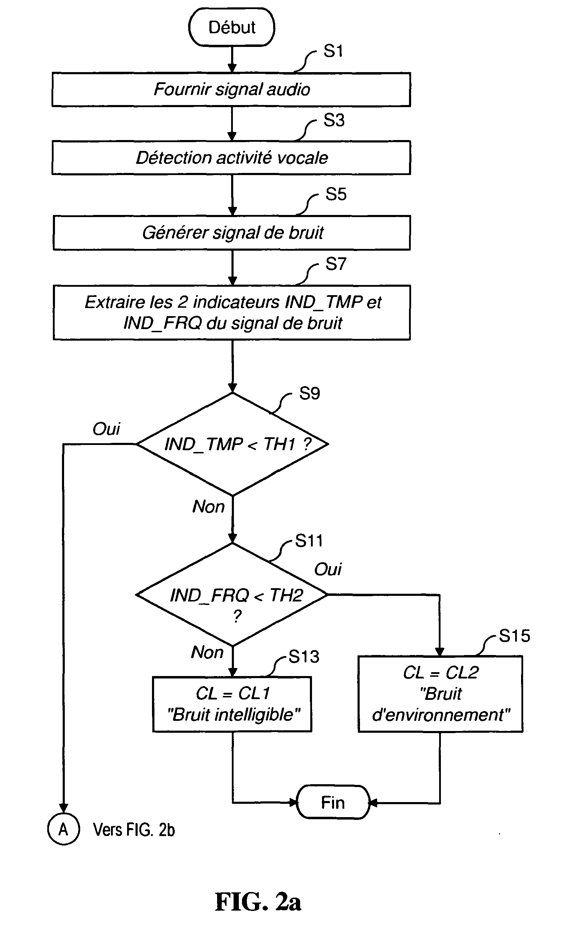

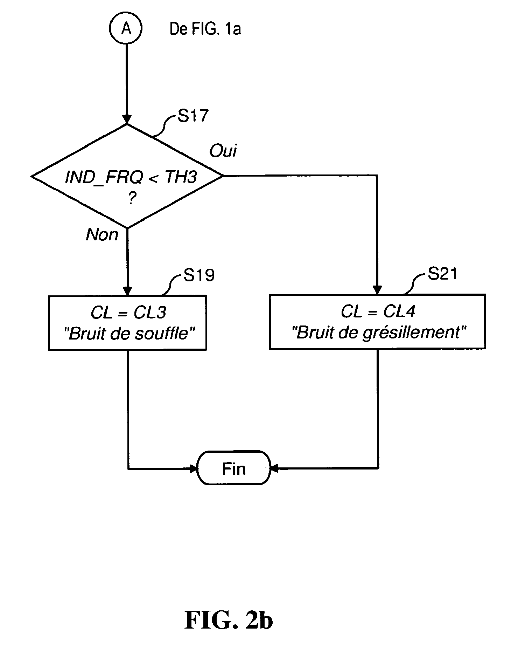

Un tel procédé de classification de bruits de fond selon l'invention est illustré dans son principe aux **figures 2a et 2b**. Comme représenté à la figure 2a, la première étape S1 consiste à obtenir un signal audio, qui, dans le mode de réalisation présenté ici, est un signal de parole obtenu sous forme analogique ou numérique. Dans ce mode de réalisation, comme illustré par l'étape S3, on applique ensuite au signal de parole une opération de détection d'activité vocale (DAV). Le but de cette détection d'activité vocale est de séparer dans le signal audio d'entrée les périodes du signal contenant de la parole, éventuellement bruitée, des périodes du signal ne contenant pas de parole (périodes de silence), par conséquent ne pouvant contenir que du bruit. Ainsi, au cours de cette étape, on sépare les zones actives du signal, c'est-à-dire présentant le message vocal bruité, des zones inactives bruitées. En pratique, dans ce mode de réalisation, la technique de détection d'activité vocale mise en oeuvre est celle décrite dans le document [5] précité ("P. 56 Mesure objective du niveau vocal actif', recommandation de l'ITU-T, 1993).

En résumé, le principe de la technique DAV utilisée consiste à :

- détecter l'enveloppe du signal,
- comparer l'enveloppe du signal avec un seuil fixe en prenant en compte un temps de maintien de la parole,
- déterminer les trames de signal dont l'enveloppe est située au dessus du seuil (DAV=1 pour les trames actives) et en dessous (DAV=0 pour le bruit de fond). Ce seuil est fixé à 15,9 dB (décibel) en dessous du niveau vocal actif moyen (puissance du signal sur les trames actives).

Une fois la détection vocale effectuée sur le signal audio, le signal de bruit de fond généré (étape S5) est le signal constitué des périodes du signal audio pour lesquelles le résultat de la détection d'activité vocale est nul.

Une fois le signal de bruit généré, les deux indicateurs mentionnés plus haut (indicateur temporel IND_TMP et indicateur fréquentiel IND_FRQ), qui ont été sélectionnés lors de l'obtention du modèle de classification (phase d'apprentissage), sont extraits du signal de bruit, au cours de l'étape S7.

Ensuite, les tests S9, S11 (Fig. 2a) et S17 (Fig. 2b) et les branches de décision associées, correspondent à l'arbre de décision décrit plus haut en relation avec la figure 1. Ainsi, à l'étape S9 la valeur de l'indicateur temporel (IND_TMP) obtenue pour le signal de bruit est comparée au premier seuil TH1 mentionné plus haut. Si la valeur de l'indicateur temporel est supérieure au seuil TH1 (S9, non) alors le signal de bruit est de type non-stationnaire et on applique alors le test de l'étape S11.

Au cours du test S11 l'indicateur fréquentiel (IND_FRQ) cette fois, est comparé au second seuil TH2 mentionné plus haut. Si l'indicateur IND_FRQ est supérieur (S11, non) au seuil TH2, la classe (CL) du signal de bruit est déterminée (étape S13) comme étant CL1 : "Bruit intelligible" ; sinon la classe du signal de bruit est déterminée (étape S15) comme étant CL2 : "Bruit d'environnement". La classification du signal de bruit analysé est alors achevée.

Lors du test initial S9, si la valeur de l'indicateur temporel est inférieure au seuil TH1 (S9, oui) alors le signal de bruit est de type stationnaire et on applique alors le test de l'étape S17 (fig. 1 b). Au test S17, on compare la valeur de l'indicateur fréquentiel IND_FRQ au troisième seuil TH3 (défini plus haut). Si l'indicateur IND_FRQ est supérieur (S17, non) au seuil TH3, la classe (CL) du signal de bruit est déterminée (étape S19) comme étant CL3 : "Bruit de souffle"; sinon la classe du signal de bruit est déterminée (étape S21) comme étant CL4 : "Bruit de grésillement". La classification du signal de bruit analysé est alors achevée.

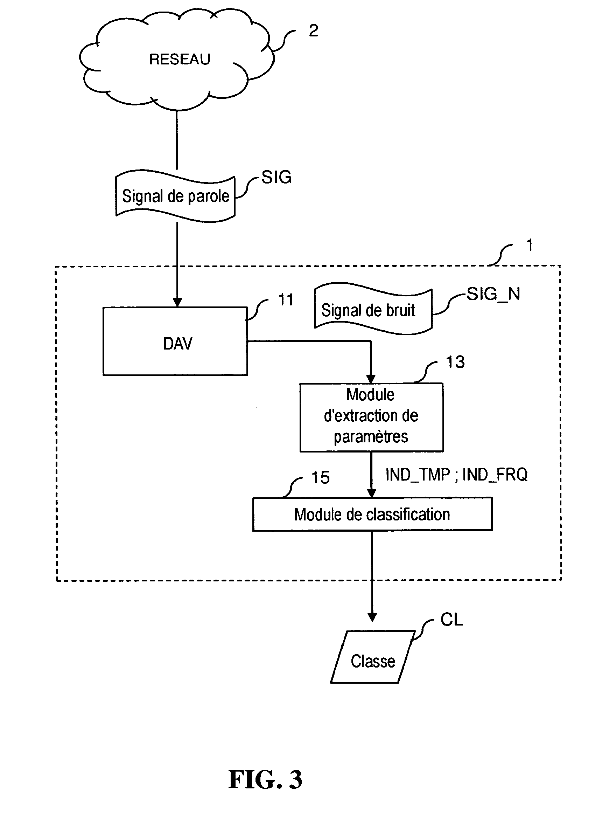

En liaison avec la **figure 3** on va à présent décrire de manière fonctionnelle un dispositif de classification de bruits de fond, selon l'invention, adapté à mettre en oeuvre le procédé de classification selon l'invention qui vient d'être décrit ci-dessus. Comme représenté à la figure 3, ce dispositif (1) de classification du bruit de fond contenu dans un signal audio, comprend un module 11 d'extraction à partir du signal audio (SIG) d'un signal de bruit de fond (SIG_N), dit signal de bruit. Selon le mode de réalisation exposé, ce module est en pratique un module de détection d'activité vocale. Le module DAV 11 fournit alors un signal de bruit SIG_N qui est délivré en entrée à un module 13 d'extraction de paramètres, c'est-à-dire de calcul des paramètres constitués des indicateurs temporel et fréquentiel, respectivement IND_TMP et IND_FRQ.

Les indicateurs calculés sont alors fournis à un module 15 de classification, implémentant le modèle de classification selon l'invention, décrit plus haut, et qui détermine en fonction des valeurs des indicateurs utilisés, la classe de bruit de fond (CL) auquel appartient le signal de bruit SIG_N, selon l'algorithme décrit en liaison avec les figures 2a et 2b.

Le signal de parole SIG d'entrée du dispositif (1) de classification de bruits de fond selon l'invention, peut être fourni au dispositif 1 à partir d'un réseau de communication 2, tel qu'un réseau de voix sur IP par exemple. Le dispositif de classification (1) selon l'invention pourra être alors un module intégré, par exemple, dans un terminal de communication comme étage d'entrée d'un module de réduction de bruit. Dans une telle application de l'invention, le résultat de la classification du bruit de fond présent dans le signal de parole pourra alors conditionner la mise en oeuvre d'une opération de débruitage du signal audio, en fonction du type de bruit de fond déterminé préalablement.

Ainsi, par exemple, si le bruit de fond est déterminé comme étant intelligible (CL1) ou relatif à l'environnement (CL2) du locuteur distant, ce bruit de fond pourra être jugé comme étant utile, puisque fournissant à l'auditeur - c'est-à-dire l'utilisateur du terminal - des informations sur le contexte (restaurant, lieu, ...) de l'appel du locuteur distant. A ce titre, il pourra être choisi de conserver ce bruit de fond dans le signal audio et donc de ne pas le supprimer par l'intermédiaire du module de débruitage.

En pratique, le dispositif de classification de bruits de fond selon l'invention est mis en oeuvre sous forme de moyens logiciels, c'est-à-dire de modules de programme d'ordinateur, réalisant les fonctions décrites en liaison avec les figures 2a, 2b et 3.

Ces modules programmes sont mis en oeuvre lorsqu'ils sont chargés et exécutés dans un ordinateur ou dispositif informatique. Un tel dispositif informatique peut être également constitué par tout système à processeur, intégré dans un terminal de communication ou dans un équipement de réseau de communication.

On notera aussi qu'un programme d'ordinateur selon l'invention, dont la finalité est la mise en oeuvre de l'invention lorsqu'il est exécuté par un système informatique approprié, peut être stocké sur un support d'informations de types variés. En effet, un tel support d'informations peut être constitué par n'importe quelle entité ou dispositif capable de stocker un programme selon l'invention.

Par exemple, le support en question peut comporter un moyen de stockage matériel, tel qu'une mémoire, par exemple un CD ROM ou une mémoire de type ROM ou RAM de circuit microélectronique, ou encore un moyen d'enregistrement magnétique, par exemple un disque dur.

D'un point de vue conception, un programme d'ordinateur selon l'invention peut utiliser n'importe quel langage de programmation et être sous la forme de code source, code objet, ou de code intermédiaire entre code source et code objet (par ex., une forme partiellement compilée), ou dans n'importe quelle autre forme souhaitable pour implémenter un procédé selon l'invention.

## Revendications

**1.** **Procédé** de classification du bruit de fond contenu dans un signal audio, comprenant les étapes consistant à :

- extraire (S3, S5) du signal audio un signal de bruit de fond, dit signal de bruit ;
**caractérisé par** les étapes:
- calculer (S7) un premier paramètre (IND_TMP), dit indicateur temporel, relatif à l'évolution temporelle du signal de bruit, et un second paramètre (IND_FRQ), dit indicateur fréquentiel, relatif au spectre fréquentiel du signal de bruit ;
- classifier (S9-S21) le bruit de fond contenu dans le signal audio parmi un ensemble prédéfini de classes de bruits de fond (CL1-CL4), en fonction des valeurs de l'indicateur temporel et de l'indicateur fréquentiel calculés.

**2.** Procédé selon la revendication 1, dans lequel l'indicateur temporel (IND_TMP) est obtenu à partir d'un calcul de variation du niveau sonore du signal de bruit.

**3.** Procédé selon l'une des revendications 1 ou 2, dans lequel l'indicateur fréquentiel (IND_FRQ) est obtenu à partir d'un calcul de variation de l'amplitude du spectre fréquentiel du signal de bruit.

**4.** Procédé selon l'une quelconque des revendications précédentes, dans lequel, pour classer le bruit de fond associé au signal de bruit, le procédé comprend les étapes consistant à :

- comparer (S9) la valeur de l'indicateur temporel (IND_TMP) obtenue pour le signal de bruit à un premier seuil (TH1), et déterminer en fonction du résultat de cette comparaison que le signal de bruit est stationnaire ou non ;
- lorsque le signal de bruit est identifié comme non-stationnaire, comparer (S11) la valeur de l'indicateur fréquentiel à un second seuil (TH2), et déterminer (S13, S15) en fonction du résultat de cette comparaison que le signal de bruit appartient à une première classe (CL1) ou à une seconde classe (CL2) de bruits de fond ;
- lorsque le signal de bruit est identifié comme stationnaire, comparer (S17) la valeur de l'indicateur fréquentiel à un troisième seuil (TH3), et déterminer (S19, S21) en fonction du résultat de cette comparaison que le signal de bruit appartient à une troisième classe (CL3) ou à une quatrième classe (CL4) de bruits de fond.

**5.** Procédé selon la revendication 4, dans lequel l'ensemble des classes comprend au moins les classes suivantes :

- bruit intelligible ;
- bruit d'environnement ;
- bruit de souffle ;
- bruit de grésillement.

6. Procédé selon l'une quelconque des revendications précédentes dans lequel que le signal audio est un signal de parole et dans lequel le signal de bruit est extrait par application au signal de parole d'une opération de détection d'activité vocale, les zones du signal de parole ne présentant pas d'activité vocale constituant le signal de bruit.

7. Dispositif de classification du bruit de fond contenu dans un signal audio, comprenant:

- un module (11) d'extraction à partir du signal audio (SIG) d'un signal de bruit de fond (SIG_N), dit signal de bruit;
**caractérisé par**:
- un module (13) de calcul d'un premier paramètre (IND_TMP), dit indicateur temporel, relatif à l'évolution temporelle du signal de bruit, et d'un second paramètre (IND_FRQ), dit indicateur fréquentiel, relatif au spectre fréquentiel du signal de bruit ;
- un module (15) de classification du bruit de fond contenu dans le signal audio parmi un ensemble prédéfini de classes (CL) de bruits de fond, en fonction des valeurs des indicateurs temporel et fréquentiel calculés.

8. Dispositif selon la revendication 7, **caractérisé en ce qu'**il comprend en outre des moyens adaptés à la mise en oeuvre d'un procédé selon l'une quelconque des revendications 2 à 6.

9. **Programme** d'ordinateur sur un support d'informations, ledit programme comportant des instructions de programme adaptées à la mise en oeuvre d'un procédé selon l'une quelconque des revendications 1 à 6, lorsque ledit programme est chargé et exécuté dans un ordinateur.

10. **Utilisation** d'un procédé de classification du bruit de fond contenu dans un signal audio, selon l'une quelconque des revendications 1 à 6, pour conditionner l'application ou non d'une opération de débruitage au signal audio, en fonction du résultat de la classification obtenu selon ledit procédé.

**Claims**

1. Method for classifying the background noise contained in an audio signal, comprising the steps consisting in:

- extracting (S3, S5) from the audio signal a background noise signal, called noise signal;
**characterized by** the steps:
- calculating (S7) a first parameter (IND_TMP), called time indicator, relating to the time evolution of the noise signal, and a second parameter (IND_FRQ), called frequency indicator, relating to the frequency spectrum of the noise signal;
- classifying (S9-S21) the background noise contained in the audio signal amongs a predefined set of classes of background noises (CL1-CL4), as a function of the calculated time indicator and frequency indicator values.

2. Method according to Claim 1, in which the time indicator (IND_TMP) is obtained from a calculation of variation of the sound level of the noise signal.

3. Method according to one of Claims 1 and 2, in which the frequency indicator (IND_FRQ) is obtained from a calculation of variation of the amplitude of the frequency spectrum of the noise signal.

4. Method according to any one of the preceding claims, in which, to classify the background noise associated with the noise signal, the method comprises the steps consisting in:

- comparing (S9) the value of the time indicator (IND_TMP) obtained for the noise signal to a first threshold (TH1), and determining according to the result of this comparison whether the noise signal is stationary or not;
- when the noise signal is identified as non-stationary, comparing (S11) the value of the frequency indicator to a second threshold (TH2), and determining (S13, S15) according to the result of this comparison whether the noise signal belongs to a first class (CL1) or to a second class (CL2) of background noises;
- when the noise signal is identified as stationary, comparing (S17) the value of the frequency indicator to a third threshold (TH3), and determining (S19, S21) according to the result of this comparison whether the noise signal belongs to a third class (CL3) or to a fourth class (CL4) of background noises.

5. Method according to Claim 4, in which the set of classes comprises at least the following classes:

   - intelligible noise;
   - environment noise;
   - white noise;
   - crackling noise.

6. Method according to any one of the preceding claims, in which the audio signal is a speech signal and in which the noise signal is extracted by application to the speech signal of a voice activity detection operation, the zones of the speech signal that have no voice activity constituting the noise signal.

7. Device for classifying the background noise contained in an audio signal, comprising:

   - a module (11) for extracting from the audio signal (SIG) a background noise signal (SIG_N), called noise signal;
   **characterized by**:
   - a module (13) for calculating a first parameter (IND_TMP), called time indicator, relating to the time evolution of the noise signal, and a second parameter (IND_FRQ), called frequency indicator, relating to the frequency spectrum of the noise signal;
   - a module (15) for classifying the background noise contained in the audio signal amongst a predefined set of classes (CL) of background noises, as a function of the calculated time and frequency indicators values.

8. Device according to Claim 7, **characterized in that** it also comprises means suitable for implementing a method according to any one of Claims 2 to 6.

9. Computer program on an information medium, said program comprising program instructions suitable for implementing a method according to any one of Claims 1 to 6, when said program is loaded and run in a computer.

10. Use of a method for classifying the background noise contained in an audio signal, according to any one of Claims 1 to 6, for conditioning the application or not of a noise-cancelling operation to the audio signal, according to the result of the classification obtained according to said method.

**Patentansprüche**

1. Verfahren zum Klassifizieren des Hintergrundrauschens, das in einem Tonsignal enthalten ist, das die folgenden Schritte enthält, bestehend aus:

   - Extrahieren (S3, S5) aus dem Tonsignal eines Hintergrundrauschsignals, Rauschsignal genannt,
   **gekennzeichnet durch** die folgenden Schritte:
   - Berechnen (S7) eines ersten Parameters (IND_TMP), Zeitindikator genannt, in Zusammenhang mit der zeitlichen Entwicklung des Rauschsignals, und eines zweiten Parameters (IND_FRQ), Frequenzindikator genannt, in Zusammenhang mit dem Frequenzbereich des Rauschsignals,
   - Klassifizieren (S9-S21) des Hintergrundrauschens, das in dem Tonsignal enthalten ist, in einer vordefinierten Einheit von Hintergrundrauschklassen (CL1-CL4) in Abhängigkeit von den berechneten Werten des Zeitindikators und des Frequenzindikators.

2. Verfahren nach Anspruch 1, bei dem der Zeitindikator (IND_TMP) ausgehend von einer Variationsberechnung des Schallpegels des Rauschsignals erhalten wird.

3. Verfahren nach einem der Ansprüche 1 oder 2, bei dem der Frequenzindikator (IND_FRQ) ausgehend von einer Variationsberechnung der Amplitude des Frequenzbereichs des Rauschsignals erhalten wird.

4. Verfahren nach einem der vorhergehenden Ansprüche, bei dem das Verfahren zum Klassifizieren des zu dem Rauschsignal gehörenden Hintergrundrauschens die folgenden Schritte aufweist, bestehend aus:

- Vergleichen (S9) des Werts des Zeitindikators (IND_TMP), der für das Rauschsignal mit einem ersten Schwellenwert (TH1) erhalten wird, und, in Abhängigkeit von dem Resultat dieses Vergleichs, Bestimmen, ob das Rauschsignal stationär ist oder nicht,
- wenn das Rauschsignal als nicht stationär identifiziert wird, Vergleichen (S11) des Werts des Frequenzindikators mit einem zweiten Schwellenwert (TH2) und, in Abhängigkeit von dem Resultat dieses Vergleichs, Bestimmen (S13, S15), ob das Rauschsignal einer ersten Klasse (CL1) oder einer zweiten Klasse (CL2) von Hintergrundrauschen angehört,
- wenn das Rauschsignal als stationär identifiziert wird, Vergleichen (S17) des Werts des Frequenzindikators mit einem dritten Schwellenwert (TH3) und, in Abhängigkeit von dem Resultat dieses Vergleichs, Bestimmen (S19, S21), ob das Rauschsignal einer dritten Klasse (CL3) oder einer vierten Klasse (CL4) von Hintergrundrauschen angehört.

5. Verfahren nach Anspruch 4, bei dem die Einheit der Klassen wenigstens die folgenden Klassen aufweist:

    - hörbares Rauschen,
    - Umgebungsrauschen,
    - weißes Rauschen,
    - Knackrauschen.

6. Verfahren nach einem der vorhergehenden Ansprüche, bei dem das Tonsignal ein Sprachsignal ist und bei dem das Rauschsignal durch Anwenden an das Sprachsignal eines Erfassungsvorgangs von Sprachtätigkeit extrahiert wird, wobei die Bereiche des Sprachsignals, die keine Sprachtätigkeit aufweisen, das Rauschsignal bilden.

7. Vorrichtung zur Klassifizierung des Hintergrundrauschens, das in einem Tonsignal enthalten ist, aufweisend:

    - ein Modul (11) zum Extrahieren ausgehend von dem Tonsignal (SIG) eines Hintergrundrauschsignals (SIG_N), Rauschsignal genannt, **gekennzeichnet durch**:
    - ein Modul (13) zum Berechnen eines ersten Parameters (IND_TMP), Zeitindikator genannt, in Zusammenhang mit der zeitlichen Entwicklung des Rauschsignals, und eines zweiten Parameters (IND_FRQ), Frequenzindikator genannt, in Zusammenhang mit dem Frequenzbereich des Rauschsignals,
    - ein Modul (15) zum Klassifizieren des in dem Tonsignal enthaltenen Hintergrundrauschens in einer Einheit vordefinierter Klassen (CL) von Hintergrundrauschen, in Abhängigkeit von den berechneten Werten des Zeitindikators und Frequenzindikators.

8. Vorrichtung nach Anspruch 7, **dadurch gekennzeichnet, dass** sie ferner Mittel aufweist, die an das Umsetzen eines Verfahrens nach einem der Ansprüche 2 bis 6 angepasst sind.

9. Computerprogramm auf einem Datenträger, wobei das Programm Programmanweisungen aufweist, die an das Umsetzen eines Verfahrens nach einem der Ansprüche 1 bis 6 angepasst sind, wenn das Programm in einen Computer geladen und ausgeführt wird.

10. Einsatz eines Verfahrens zum Klassifizieren des Hintergrundrauschens, das in einem Tonsignal enthalten ist, nach einem der Ansprüche 1 bis 6, als Bedingung für die Anwendung oder nicht eines Denoising-Vorgangs an das Tonsignal in Abhängigkeit von dem Resultat der Klassifizierung, das gemäß dem Verfahren erhalten wird.

**FIG. 1**

```
                    ┌─────────┐
                    │  Début  │
                    └────┬────┘
                         │         ⟋ S1
          ┌──────────────▼──────────────┐
          │      Fournir signal audio    │
          └──────────────┬──────────────┘
                         │         ⟋ S3
          ┌──────────────▼──────────────┐
          │    Détection activité vocale │
          └──────────────┬──────────────┘
                         │         ⟋ S5
          ┌──────────────▼──────────────┐
          │      Générer signal de bruit │
          └──────────────┬──────────────┘
                         │         ⟋ S7
          ┌──────────────▼──────────────┐
          │ Extraire les 2 indicateurs   │
          │ IND_TMP et IND_FRQ du        │
          │ signal de bruit              │
          └──────────────┬──────────────┘
                         │
                         │         ⟋ S9
  Oui              ◇◇◇◇◇▼◇◇◇◇◇
 ◀─────────────────   IND_TMP < TH1 ?
                      ◇◇◇◇◇◇◇◇◇◇◇
                         │
                        Non
                         │         S11
                   ◇◇◇◇◇▼◇◇◇◇◇        Oui
                     IND_FRQ < TH2  ─────────┐
                         ?                    │
                   ◇◇◇◇◇◇◇◇◇◇◇                │
                        Non                   │   ⟋ S15
                         │   S13      ┌───────▼────────┐
                 ┌───────▼───────┐    │   CL = CL2      │
                 │   CL = CL1     │    │   "Bruit        │
                 │ "Bruit         │    │  d'environnement"│
                 │  intelligible" │    └───────┬────────┘
                 └───────┬───────┘             │
                         │      ┌────────┐     │
                         └─────▶│  Fin   │◀────┘
                                └────────┘
```

$( A )$  Vers FIG. 2b

## FIG. 2a

(A) De FIG. 1a

S17

Oui

IND_FRQ < TH3 ?

Non

S19

CL = CL3
"Bruit de souffle"

S21

CL = CL4
"Bruit de grésillement"

Fin

**FIG. 2b**

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. LEMAN ; J. FAURE ; E. PARIZET.** Influence of informational content of background noise on speech quality evaluation for VoIP application. *la conférence ''Acoustics'08,* 29 Juin 2008
- **L. MA ; D.J. SMITH ; B.P. MILNER.** Context awareness using environmental noise classification. *la conférence ''Eurospeech,* 2003
- **N. THAPHITHAKKUL et al.** Robust speech recognition using PCA-based noise classification. *la conférence ''SPECOM,* 2005
- **K. EL-MALEH et al.** Frame-level noise classification in mobile environments. *Proc. IEEE Conf. Acoustics, Speech, Signal Proc.,* Mars 1999, 237-240
- *Transmission characteristics for wideband (150-7000 Hz) digital hands-free telephony terminals,* 1998, 341
- **LEO BREIMAN et al.** Classification and regression trees. Chapman and Hall, 1993
- *Mesure objective du niveau vocal actif,* 1993, 56